# EUROPEAN PATENT APPLICATION

(11) **EP 2 669 585 A1**
(43) Date of publication of application: **04.12.2013**
(21) Application number: 13170011.4
(22) Date of filing: 31.05.2013
(51) Int. Cl.: F24D 11/02, F24D 17/00, F24D 17/02, F24J 2/04

(54) **Solar air source heat pump system**

(30) Priority: 01.06.2012 GB 201209811
(71) Applicant: TEV Limited, Brighouse, Yorkshire HD6 1QF (GB)
(72) Inventor: Chisman, Christopher, Brighouse, Yorkshire HD6 1QF (GB)
(74) Representative: Jackson, Derek Charles

(57) **Abstract**

A solar air source heat pump system comprises a solar thermal system (21) and an air source heat pump system (22). The solar thermal system (21) comprises tubing providing a heat transfer fluid circuit (16), a solar thermal collector (13, 23) where the heat transfer fluid absorbs solar energy, a storage tank (25) for storing the heat transfer fluid, and a controller (31) for controlling the solar thermal system. The air source heat pump system (22) comprises tubing providing a refrigerant circuit (18), a compressor (27) for compressing the refrigerant, a condenser (28) for cooling the refrigerant, an expansion device (29) configured to reduce the pressure of the refrigerant, and an evaporator (26) where the refrigerant is evaporated. At least part of the tubing for the refrigerant circuit (18) is located within the solar thermal collector (13, 23).

## Description

This invention relates to a solar air source heat pump system. In particular, the present invention relates to a solar air source heat pump system comprising an air source heat pump system and a solar thermal system.

Current domestic hot water (DHW) systems and space heating (SH) systems utilise a variety of renewable energy technologies. For example, solar thermal collectors are mostly used for DHW purposes, but are sometimes also used for SH purposes. Air source heat pumps are mostly used for SH purposes.

A solar thermal collector can be in the form of a solar hot water panel designed to collect heat by absorbing sunlight. There are two types of solar thermal collectors: flat plate collectors and evacuated tube solar collectors.

Flat plate collectors consist of a dark flat-plate absorber of solar energy, a transparent cover such as glass that allows solar energy to pass through but reduces heat losses, a heat transfer fluid (HTF) such as water to remove heat from the absorber, and a heat insulating backing. Generally, the absorber consists of a thin absorber sheet of thermally stable polymers, aluminium, steel or copper, to which a matt black or selective coating is applied.

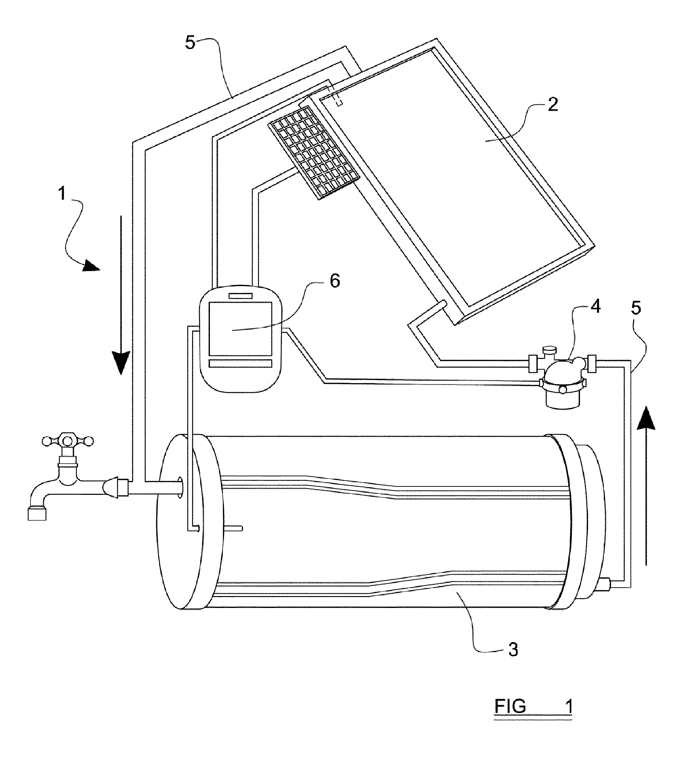

Figure 1 shows a known solar thermal system 1 comprising a flat plate collector 2. In such systems, a large storage tank 3 is ground- or floor-mounted and is below the level of the collector 2 and the HTF is usually circulated using a circulating pump 4 through tubing 5 to transfer heat from the absorber to the storage tank 3. Usually, an additional heat source such as an oil, gas or electric heater is also provided in the storage tank 3 for use, for example in winter, when there is not sufficient solar heat gain to deliver the required amount of hot water. Typically, a programmable differential controller 6 may be used to control the system.

When no hot water has been used for a day or two, the fluid in the collectors 2 and storage tank 3 can reach very high temperatures in all systems except for those of the drainback variety of solar thermal collector. In a drainback system, the collector piping is not pressurized and includes an open drainback reservoir. If the pump is switched off, the HTF drains into the drainback reservoir and none remains in the collector. When the storage tank in a drainback system reaches its desired temperature, the pumps are shut off, terminating the heating process and thus preventing the storage tank from overheating.

Some systems deliberately cool the water in the storage tank 3 by circulating hot water through the collector 2 at times when there is little sunlight or at night, causing increased heat loss. This can be ineffective and the system can still overheat and ultimately will have to rely on the operation of temperature and pressure relief valves.

Due to the risk of overheating, such solar thermal collectors require the use of particularly durable material, which may be costly.

An air source heat pump (ASHP) is a heating and cooling system that generally uses outside air as its heat source and heat sink. In accordance with the principles of vapor compression refrigeration, an ASHP uses a circulating liquid refrigerant as the medium which absorbs and removes heat from the space to be cooled and subsequently rejects that heat elsewhere. In domestic heating use, an ASHP absorbs heat from outside air and releases it inside during winter, and can often do the converse in summer.

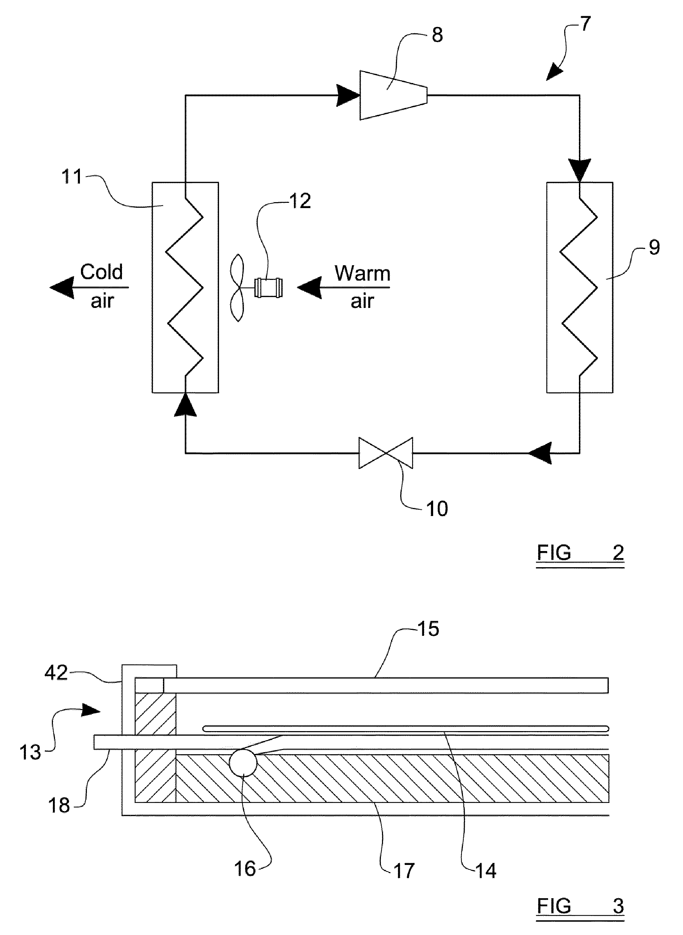

Figure 2 depicts a typical, single-stage vapor-compression system 7. Such systems typically have four components: a compressor 8, a condenser 9, a (thermal) expansion device 10 (versions of which are called a throttle valve or Tx Valve or TxV), and an evaporator 11.

Circulating refrigerant enters the compressor 8 as a saturated vapor and is compressed to a higher pressure and higher temperature. The hot, compressed vapor (superheated vapor) is routed through the condenser 9 where it is cooled and condensed into a liquid by passing through a coil or tubes with cool water or cool air flowing across the coil or tubes. This is where the circulating refrigerant rejects heat from the system and the rejected heat is carried away by either the water or the air, whichever is used.

The condensed liquid refrigerant, in the form of a saturated liquid, is next routed through expansion device 10 where it undergoes an abrupt reduction in pressure. That pressure reduction results in an adiabatic flash evaporation of a part of the liquid refrigerant. The auto-refrigeration effect of the adiabatic flash evaporation lowers the temperature of the liquid and vapor refrigerant mixture so that it is colder than the temperature of the enclosed space to be refrigerated.

The cold mixture is then routed through the coil or tubes in the evaporator 11. A fan 12 circulates the warm air across the coil or tubes carrying the cold refrigerant liquid and vapor mixture. That warm air evaporates the liquid part of the cold refrigerant mixture and at the same time the air is cooled. The evaporator 11 is where the circulating refrigerant absorbs and removes heat which is subsequently rejected in the condenser 9 and transferred elsewhere by the water or air used in the condenser 9.

To complete the refrigeration cycle, the refrigerant vapor from the evaporator again becomes a saturated vapor and is routed back into the compressor 8.

Both solar thermal collector and ASHP systems can be used for the purposes of DHW and SH, even though solar thermal collectors are mostly used for DHW and ASHP systems are mostly used for SH. In any case, each system is always used as an independent system and even when they are both used they are always used as two entirely separate systems.

As separate systems, they both lack performance when they are needed most. Solar thermal collectors do not work well when there is no sun, but that is also mostly likely when hot water is needed most. ASHP systems do not work well when there is cold air, but that is also mostly likely when heating is most needed.

Furthermore, both systems are not standalone and they both require an auxiliary heater such as an electric, oil or gas heater, depending on given climate scenarios in the relevant location.

It is therefore an object of the present invention to provide a solar heat source pump system which overcomes, or at least ameliorates, the above mentioned disadvantages.

According to a first aspect of the present invention there is provided a solar air source heat pump system comprising: a solar thermal system which comprises tubing providing a heat transfer fluid circuit, a solar thermal collector where the heat transfer fluid absorbs solar energy, a storage tank for storing the heat transfer fluid, and a controller for controlling the solar thermal system; and an air source heat pump system comprising tubing providing a refrigerant circuit, a compressor for compressing the refrigerant, a condenser for cooling the refrigerant, an expansion device configured to reduce the pressure of the refrigerant, and an evaporator where the refrigerant is evaporated; wherein at least part of the tubing for the refrigerant circuit is located within the solar thermal collector.

Therefore the ASHP system in the present invention can absorb heat from warm air surrounding the solar collector. The solar thermal collector is typically located to maximise the amount of radiation received. Such locations receive the maximal amount of sunshine, so the air in such locations also tends to be relatively warmer comparing to other available locations.

Furthermore, the provision of refrigerant tubing in a solar collector facilities the combination of a solar thermal system and an air source heat pump system, and allows the refrigerant to collect solar energy in a solar evaporator as well as heat energy in an air sourced evaporator. This helps the system to boost the coefficient of the power of the ASHP.

Such systems enjoy improved performance. This is especially true, when the weather is cold but sunny, or when the weather is warm but not sunny such as cloudy or raining. When the weather is cold but sunny, the solar thermal system of the present invention would work better, whereas when the weather is warm but not sunny, the ASHP system of the present invention would work better. In such conditions, the overall used amount of renewable energy is higher using the combined system of the present invention, leading to higher efficiency.

The condenser may be provided within the storage tank. This simplifies the system, reducing cost and further integrating the solar thermal system and the ASHP system of the invention.

Combining a solar thermal system with an ASHP system means that both systems can contribute energy to the thermal storage in the storage tank.

The controller may further control the air source heat pump system. This simplifies the system, reducing cost and further integrating the solar thermal system and the ASHP system of the invention.

The evaporator may be located within the solar thermal collector. In this way, the evaporator is best placed for the refrigerant to absorb heat from warm air heated up by the sun in a location which has been chosen to maximise the amount of radiation received.

Furthermore, the provision of the evaporator in a solar collector, together with the provision of a low pressure receiver as shown in some embodiments, creates a secondary solar evaporator for the ASHP system of the present invention, thus allowing the refrigerant to collect solar energy from the sun and transfer into another medium such as water/glycol. This helps to boost the coefficient of the power of the ASHP.

A substantial part of the tubing for a refrigerant circuit located within the solar thermal collector and a substantial part of the tubing for a heat transfer fluid circuit located within the solar thermal collector may be substantially evenly distributed within the solar thermal collector. Thus the relevant parts of both tubing are able to interact with the whole of the solar collector efficiently when they are required to operate.

A substantial part of the tubing for the heat transfer fluid circuit located within the solar thermal collector may run transversely of the tubing for the refrigerant circuit located within the solar thermal collector. This allows the system to perform an effective method for overheating prevention by making it possible to promote a natural thermo-siphon circulation of the water/glycol solution from the overheated tubing for a heat transfer fluid circuit, through to the tubing for the refrigerant circuit located within the solar collector, where it loses the heat to the air and refrigerant.

A substantial part of the tubing for a heat transfer fluid circuit located within the solar thermal collector may run substantially perpendicularly across the tubing for the refrigerant circuit located within the solar thermal collector. This ensures more effective prevention of overheating of the solar thermal collector because the thermo-siphon circulation of heat from the tubing for the heat transfer fluid circuit to the tubing for a refrigerant circuit would be more effective.

The effective prevention of overheating provided by such structures means that less durable material may be used in constructing the solar collector of the present invention, thus reducing cost of construction.

The system may further comprise a receiver for controlling the expansion device of the air source heat pump system. This allows the system to control the amount of refrigerant in the system.

Preferably, the receiver may be a low pressure receiver. The low pressure receiver may be in the form of a vessel.

A liquid level sensor may be provided within the receiver, for example including a low level switch and a high level switch.

The evaporator may comprise a first evaporator part and a second evaporator part, the receiver being configured to allow refrigerant to enter the first evaporator from the receiver and also to allow refrigerant to enter the second evaporator from the receiver. Refrigerant leaving the first evaporator may pass to the receiver and refrigerant leaving the second evaporator may also pass to the receiver. The first evaporator may be an air source evaporator and the second evaporator may be a solar evaporator.

The provision of such structures allows for a mechanism which ensures that there is always liquid refrigerant within the solar evaporator. This mechanism ensures that the solar heat is utilised completely automatically and eliminating the needs for additional refrigerant valves, sensors, pumps or complex software algorithms.

In accordance with another aspect of the present invention, there is provided a solar thermal collector comprising a transparent cover configured to allow solar energy to pass through, an absorber for absorbing solar energy, a heat insulating backing, and part of tubing for a heat transfer fluid circuit, wherein the solar thermal collector also comprises at least part of tubing for a refrigerant circuit for use in an air source heat pump.

The second aspect of the invention may be combined with the first aspect thereof.

The provision of refrigerant tubing in the solar collector ensures that it is best placed for the refrigerant to absorb heat from warm air heated up by the sun in a location which has been chosen to maximise the amount of radiation received. Furthermore, the provision of refrigerant tubing in the solar collector facilities the combination of a solar thermal system and an air source heat pump system, and allows the refrigerant to collect solar energy in a solar evaporator as well as heat energy in an air sourced evaporator with the help of a low pressure receiver. This helps the system to boost the coefficient of the power of the ASHP.

A substantial part of the tubing for the refrigerant circuit located within the solar thermal collector and a substantial part of the tubing for the heat transfer fluid circuit located within the solar thermal collector may be substantially evenly distributed. Therefore, the relevant parts of the tubing are able to interact with the whole of the solar collector efficiently when they are required to operate.

A substantial part of the tubing for the heat transfer fluid circuit located within the solar thermal collector may run transversely of the tubing for the refrigerant circuit located within the solar thermal collector. This provides an effective method of overheating prevention by making it possible to promote a natural thermo-siphon circulation of the water/glycol solution from the overheated tubing for the heat transfer fluid circuit, through to the tubing for the refrigerant circuit located within the solar collector, where it loses the heat to the air and refrigerant.

A substantial part of the tubing for the heat transfer fluid circuit located within the solar thermal collector may run substantially perpendicularly across the tubing for the refrigerant circuit located within the solar thermal collector. This ensures more effective prevention of overheating of the solar thermal collector because the thermo-siphon circulation of heat from the tubing for the heat transfer fluid circuit to the tubing for the refrigerant circuit would be more effective.

For a better understanding of the present invention and to show more clearly how it may be carried into effect reference will now be made, by way of example, to the accompanying drawings in which:

Figure 1 shows a typical solar thermal system in accordance with the prior art;

Figure 2 shows a typical ASHP system in accordance with the prior art;

Figure 3 is a schematic diagram of part of a solar thermal collector for use in the present invention;

Figure 4 is a simple schematic diagram showing an arrangement of tubing for a heat transfer fluid circuit and tubing for a refrigerant circuit within a solar thermal collector for use in the present invention;

Figure 5 shows a solar air source heat pump system for use in the present invention;

Figures 6a and 6b are graphs demonstrating a method for providing a defrost check in the system;

Figure 7 shows an alternative ASHP system for use in the present invention; and

Figure 8 shows an alternative solar air source heat pump system for use in the present invention.

In the following discussion, examples of a solar air source heat pump system will be explained in accordance with embodiments of the present invention, together with examples of structures of solar thermal collectors which can be used in solar air source heat pumps of the present invention. Examples will be described in which the solar thermal collector is a flat plate collector and the solar thermal systems comprises a pump, but it is to be understood that the present invention is not limited to such solar thermal collectors and solar thermal systems. Indeed the present invention is applicable to any type of solar thermal collectors and solar thermal systems. Similarly, the present invention is applicable to any type of ASHP systems. Furthermore, the present invention is discussed in the context of domestic hot water and space heating provision, but it is to be understood that the present invention is also applicable to other types of structures such as industrial buildings.

Figure 3 shows the structure of a solar thermal collector integrated with refrigerant tubing of a heat pump in accordance with an embodiment of the present invention.

The solar thermal collector 13 of this embodiment may be a flat plate collector. It may comprise an absorber sheet 14 for absorbing solar energy, a transparent cover 15 such as a glass cover which allows solar energy to pass through but reduces heat losses, an HTF to remove heat from the absorber through tubing forming part of an HTF circuit 16, a heat insulating backing 17 and a frame 42.

The absorber sheet 14 may be made of thermally stable polymers, aluminium, steel or copper, to which a matte black or selective coating is applied. In a preferred embodiment, the absorber sheet 14 comprises a continuous absorber sheet, enabling heat transfer over the whole collector area. Both refrigerant and water/glycol can use the whole collector area at different times.

In one embodiment, the HTF may be provided by water. In a preferred embodiment, glycol or any other suitable antifreeze may be added to the water to prevent freezing.

The solar thermal collector 13 of the present invention also comprises tubing for a refrigerant circuit 18. In one embodiment of the present invention, the tubing for a refrigerant circuit 18 in the solar thermal collector 13 acts as a secondary evaporator for the ASHP.

In this embodiment of the present invention, the outer appearance and handling of the collector 13 remains similar to the currently available solar thermal collectors. Consequently, currently available standard parts can be used in implementing the present invention. Furthermore, similar hydronics also means that standard parts can be easily mounted in the structure of the present invention.

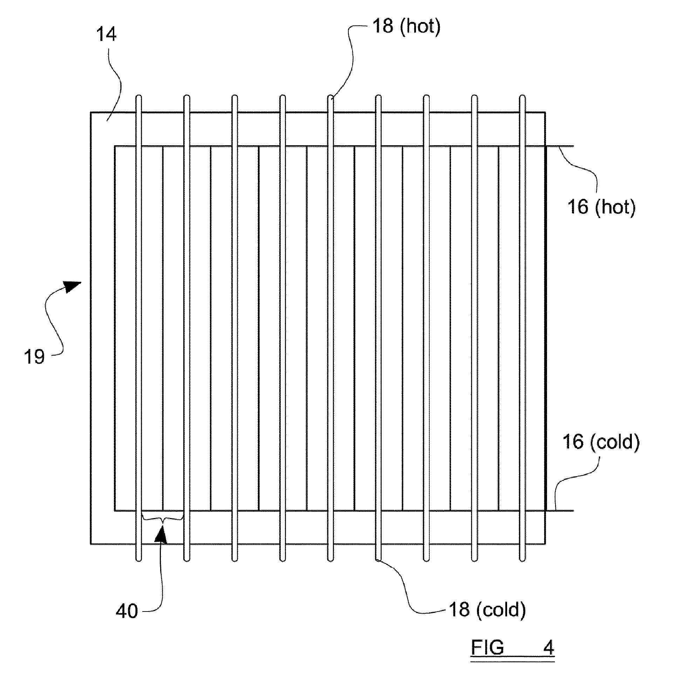

Figure 4 shows more clearly the tubing for an HTF circuit 16 and the tubing for a refrigerant circuit 18 over the collector area 19 in accordance with an embodiment of the present invention.

As shown in Figure 4, the collector comprises a continuous absorber sheet 14, enabling heat transfer over the whole of the collector area 19 together with refrigerant tubing arrays 18 and water/glycol tubing arrays 16.

In a preferred embodiment, both refrigerant tubing arrays 18 and water/glycol tubing arrays 16 are evenly distributed throughout the absorber assembly. Thus each tubing array 16 or 18 is able to interact with the whole of the solar collector 13 efficiently when required to operate.

The provision of refrigerant tubing 18 in a solar collector 13 facilities the combination of a solar thermal system and an air source heat pump system and allows the refrigerant to collect solar energy as well as heat energy. This helps the system to boost the coefficient of the power of the ASHP.

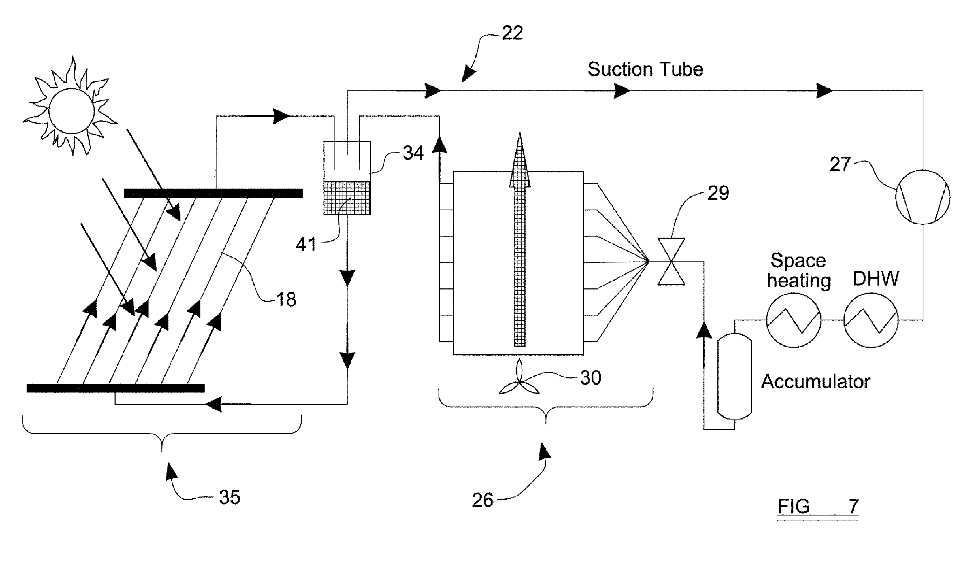

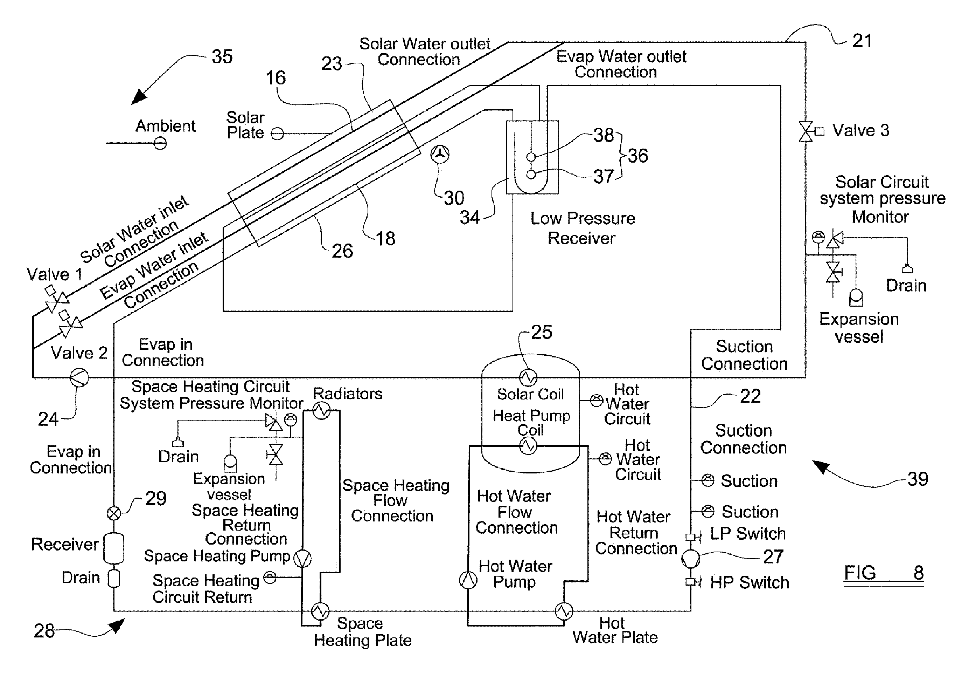

Furthermore, the provision of refrigerant tubing 18 in a solar collector 13 ensures that the refrigerant is best placed to absorb heat from warm air heated up by the sun in a location which has been chosen to maximise the amount of radiation received. In particular, the inclusion of refrigerant tubing 18 in the solar collector 13 permits utilisation of radiant heat energy in the ASHP operating mode for example for SH, as explained hereinafter in relation to Figures 7 and 8. This may happen when there is SH demand and the levels of solar radiation are insufficient to bring the solar collector water temperature up to a temperature higher than the stored water or when the solar collected water temperature has reached its set point.

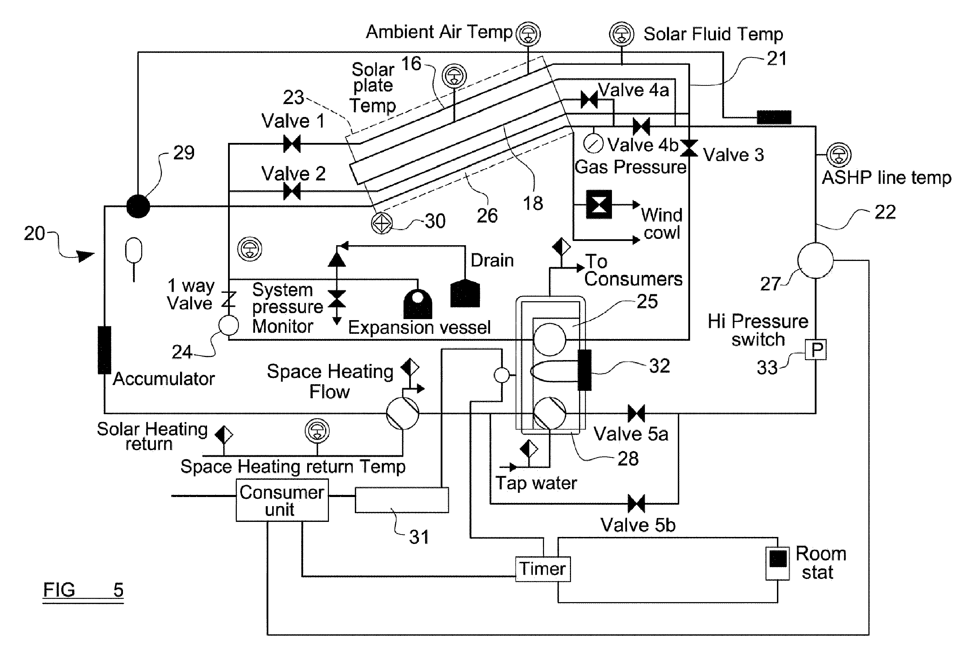

Figure 5 shows a solar air source heat pump system 20 which is a combined system of a solar thermal system 21 and an air source heat pump system 22 in accordance with a first configuration of the present invention.

Any standard solar thermal system and any standard air source heat pump system may be used for this combination. In a similar manner to standard solar thermal systems, the solar thermal system 21 of the combined system 20 comprises a solar collector 23, a circulating pump 24, and a storage tank 25. In a similar manner to standard ASHP systems, the ASHP system 22 of the combined system 20 comprises of an air source evaporator 26, a compressor 27, a condenser 28, a (thermal) expansion device 29 (such as a valve, for example a throttle valve), and a fan 30.

As can be seen from Figure 5, in this embodiment of the present invention, the air source evaporator 26 is located close to the solar collector 23. It is advantageous to place the air source evaporator 26 sufficiently close to the solar collector 23 such that the refrigerant can absorb heat from surrounding air which is located to be effectively heated by the sun. This is because the solar thermal collector 23 is typically placed to maximise the amount of radiation received, and such locations receive the maximal amount of sunshine, so the air in such locations also tends to be relatively warmer compared to other available locations where the solar thermal collector may be placed. In a preferred embodiment as shown in Figures 3 and 4, the air source evaporator 26 is located within the solar collector 23, so that it is best placed for the refrigerant to absorb heat from warm air heated up by the sun in a location which has been chosen to maximise the amount of radiation received.

The controller 31 of the system 20 controls both the solar thermal system 21 and the ASHP system 22. Furthermore, the condenser 28 of the ASHP system 22 is provided at the storage tank 25 of the solar thermal system 21, possibly within the storage tank 25 of the solar thermal system 21. These features contribute to simplifying the combined system, reducing costs, and further integrating the solar thermal system and the ASHP system of the present invention, thereby resulting in a combined system which is more than the separate systems which it combines.

The system 20 may operate in five different modes under control of the controller 31, which are "Off / System Fault Mode", "Solar Only Mode", "Solar and ASHP Mode", "ASHP Only Mode" and "ASHP Defrost Mode". Entry and exit from the different modes may be decided by the system controller 18.

In addition to selecting the correct mode of operation, the controller 31 may evaluate whether there is sufficient energy input to meet the heating and hot water demands. If more energy is being used than being replaced, then an auxiliary heating source 32, such as an immersion heater, may be enabled to allow the system to cope with demand. In one embodiment, if the ambient temperature outside is less than a defined set point, the auxiliary heating source 32 can be turned on if there is a demand for SH.

The OfF / System Fault Mode may be entered when the system 20 is turned ofF or a fault has occurred. The mode is designed to prevent damage over the full range of environmental conditions expected for the system. In one configuration of this mode, the compressor 27, the pump 24 and the fans 30 are all turned off. Furthermore, valves 1, 2, 5a, 5b are open, (thermal) expansion device 29 is operating, and valve 3 is closed.

The Solar Only Mode may be entered when the storage tank 25 temperature is less than the solar collector 23 temperature and also less than a predetermined first threshold (which may be varied if desired). This allows the system 20 to store energy when it is readily available from the solar collector 23 regardless of whether there is heating or hot water demand at the time. This mode uses the least amount of electrical power as only a water pump 24 is energised.

In one configuration of this mode, the compressor 27 and the fans 30 are turned off and the pump 24 is turned on. Furthermore, valves 1, 3, 4a, 4b, 5a, 5b are open, (thermal) expansion device 29 is operating, and valve 2 is closed.

When the storage tank 25 temperature reaches the solar collector 23 temperature or an upper limit of the predetermined first threshold, the system 20 may exit the Solar Only Mode. The upper limit of the predetermined first threshold may be set, for example, at 95 °C.

In the Solar and ASHP Mode, the refrigerant is passed through the solar collector 23 to gain additional heat when, for example, there is timed demand for heating or hot water. The system 20 may enter the Solar and ASHP Mode, when the solar collector 23 temperature is greater than the ambient temperature plus a predetermined second threshold (which may be varied). The predetermined second threshold may be set, for example, at 15 °C. This mode uses available solar energy to boost the coefficient of power of the ASHP.

In one configuration of this mode, the compressor 27 is turned on, the pump 24 is off and the fans 30 are under speed control. Furthermore, valves 1, 2, 3 and 4b are closed, valve 4a is open, (thermal) expansion device 29 is operating, and the three way valve bypass 5a and 5b may be closed or open depending on heating conditions.

The system 20 may exit the Solar and ASHP Mode, when there is no demand for heating or hot water, or when the heat generated is less than the temperature of the water in the storage tank 25. For example, the system may exit this mode when the solar collector 23 temperature is no longer greater than the ambient temperature plus a predetermined third threshold (which may be variable). The predetermined third threshold may be set, for example, at 2 °C.

When there is demand for heating or hot water and the solar collector 23 temperature is no greater than the ambient temperature, the system may enter the ASHP Only Mode. In one configuration of this mode, the compressor 27 and the fans 30 are turned on and the pump 24 is off. Furthermore, valves 1, 2, 3, and 4a are closed, valve 4b is open, the three way valve bypass 5a and 5b may be closed or open depending on heating conditions, and (thermal) expansion device 29 is operating as normal.

The system 20 may exit the ASHP Only Mode when there is no more demand for heating or hot water, or when the high pressure switch 33 is activated, when the solar collector 23 temperature is no greater than the ambient temperature less a predetermined fourth threshold (which may be variable), or when there is any other critical alarm.

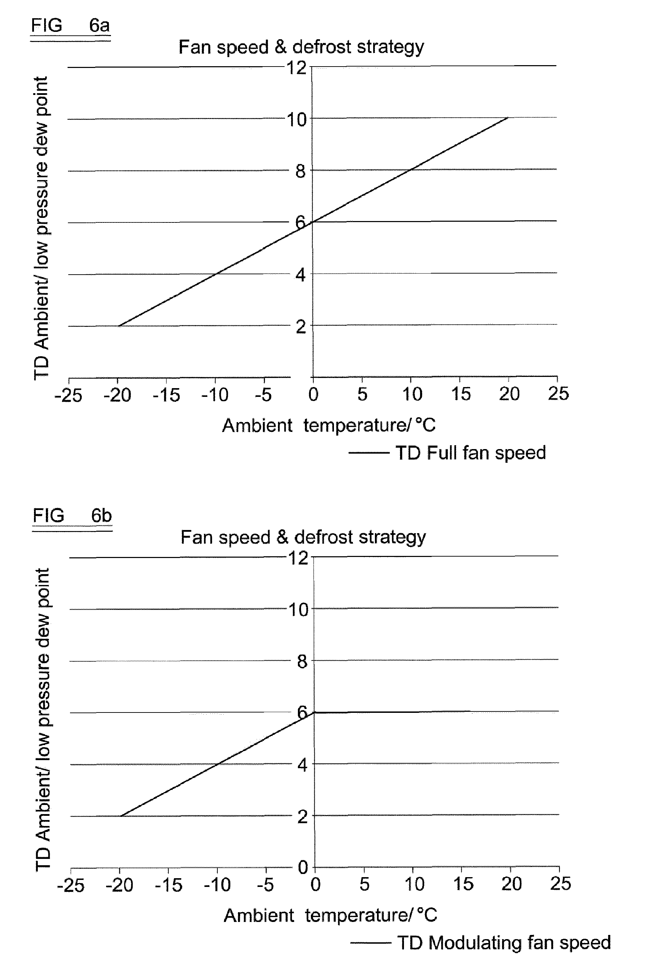

The system 20 may provide for a defrost check. As shown in Figures 6a and 6b, TD ambient/low pressure dew point at TD modulating fan speed may indicate frost conditions. To defrost, the system 20 may enter the ASHP Defrost Mode. In one configuration of this mode, the compressor 27 and the fans 30 are turned off and the pump 24 is on. Furthermore, valves 1, 4a, 4b are closed, (thermal) expansion device 29 is not operating, and valves 2, 3, 5a, and 5b are open.

The combination of these two systems 21 and 22 means they both can contribute energy to the thermal storage in the storage tank 25.

Additionally, the ASHP system 22 in the present invention can absorb heat from warm air in the solar collector 23, leading to improved performance when the weather is cold but sunny, or when the weather is warm but not sunny such as cloudy or raining. When the weather is cold but sunny, the solar thermal system 21 of the present invention would work better, whereas when the weather is warm but not sunny, the ASHP system 22 of the present invention would work better. In such conditions, the overall amount of renewable energy is higher using the combined system 20 of the present invention, leading to higher efficiency.

Figure 7 shows an alternative ASHP system 22 configuration in accordance with the present invention, and Figure 8 shows an alternative solar air source heat pump system 39 configuration of the present invention incorporating the alternative ASHP system 22 shown in Figure 7. In this alternative configuration shown in Figures 7 and 8, valves 4a and 4b in the configuration of Figure 5 have been replaced by a low pressure receiver 34. In this configuration, the ASHP system 22 is provided with a solar evaporator 35 in addition to an air source evaporator 26.

In this configuration, the design of the system 39 is such that a liquid level sensor 36 within the low pressure receiver 34 controls the superheat settings of an expansion device 29 (such as an electronic expansion valve). In a preferred embodiment, the liquid level sensor 36 comprises two level switches: a low liquid level switch 37 and a high level switch 38.

This ensures that there is always liquid refrigerant 37 within the solar evaporator.

When solar radiation energy is available the refrigerant will evaporate naturally in the heat and create a thermo-siphon effect. This will start to lower the level of refrigerant within solar evaporator 35, which will in turn trigger the low liquid level switch 37 within the low pressure receiver 34. This will effectively open the expansion device 29, allowing a little more refrigerant through and effectively improving the efficiency of the system.

When the amount of solar radiation energy reduces, the reverse occurs. The system 39 uses a low pressure receiver 34 as a reservoir of refrigerant to ensure a thermo-cycle can take place in the circuit. This simple but elegant control method ensures that the solar heat is utilised completely automatically and there is no need for extra refrigerant valves, sensors, pumps or complex software algorithms.

The provision of the evaporator 35 within the solar collector 23, together with the provision of a low pressure receiver 34, creates a secondary solar evaporator 35 for the ASHP system 22 of the present invention, and thus allows the refrigerant to collect solar energy and transfer into another medium such as water/glycol. The system 39 uses solar energy to drive the evaporator 35 and 26 and condensing cycle to transfer heat energy which helps to boost the coefficient of power of the ASHP.

Furthermore, the addition of the solar evaporator 35 has no negative effect on efficiency when running without solar assistance because the solar evaporator 35 operates in parallel with the system and is completely bypassed in this mode.

In a similar manner to the configuration shown in Figure 5, the system 39 may also operate in the same five different modes, which are "Off/System Fault Mode", "Solar Only Mode", "Solar and ASHP Mode", "ASHP Only Mode" and "ASHP Defrost Mode".

In particular, the system may enter the Solar Only Mode, if there is a demand for heat and sun is available. In a similar manner to a standard solar thermal collector, in this mode the solar collector 23 absorbs heat and the heat is carried to the thermal storage 25 by water/glycol. In the Solar and ASHP Mode, the refrigerant is used to collect energy from the sun and transfer into another medium such as water/glycol. The refrigerant is partly evaporated in the ASHP-circuit, thus contributing to the SH-loop. That is, the liquid refrigerant that has passed through the DHW and space heating coils and the accumulator, is expanded through the expansion device 29, and then enters the air source evaporator 26, exits as a liquid, a gas, or a mixture of liquid and gas, and passes to the low pressure receiver 34. When solar energy is available, liquid from the receiver 34 passes to the bottom of the solar evaporator 35 where it is evaporated, the gas returning to the receiver 34. Gas is drawn out of the top of the receiver 34 by suction and passes to the compressor 27, where it is converted to high pressure, high temperature gas, and thereafter to the DHW and space heating coils and the accumulator as mentioned above.

According to some embodiments of the present invention, the regulation of the water/glycol circuit 16 may be accomplished either by temperature measurement or by the measurement of solar radiation.

A natural thermo-siphon circulation through the collector 23 and air source evaporator 26 in overheating mode allows protection from excessively high temperatures by thermal transfer to air / refrigerant.

In a configuration in accordance with the embodiments of the present invention shown in Figures 3 and 4, the refrigerant evaporator tubing 18 which is positioned beneath the solar panel also has a small array 40 of water tubes 16 running through it. These water tubes 40 run across to the solar collector 23 in such a way as to become available to prevent the overheating of the water/glycol system when the DHW requirement has been satisfied. To achieve effective prevention of overheating, it may be advantageous that a substantial part of the tubing for a heat transfer fluid circuit runs across the tubing for a refrigerant circuit. In a preferred embodiment, a substantial part of the tubing for a heat transfer fluid circuit runs substantially perpendicularly across the tubing for a refrigerant circuit.

Once overheating of the water/glycol circuit is detected, by adjusting the valves it is possible to promote a natural thermo-siphon circulation of the water/glycol solution from the tubing for a HTF circuit in the solar collector 23, where it collects the heat energy, through to the tubing for a refrigerant circuit in the air source heat pump evaporator 26 located within the solar collector 23, where it loses the heat to the air and refrigerant.

This effective method of overheating prevention of the solar collector also means that less durable material may be used in constructing the solar collector, reducing cost.

## Claims

1. A solar air source heat pump system comprising: a solar thermal system (21) which comprises tubing providing a heat transfer fluid circuit (16), a solar thermal collector (13, 23) where the heat transfer fluid absorbs solar energy, a storage tank (25) for storing the heat transfer fluid, and a controller (31) for controlling the solar thermal system; and an air source heat pump system (22) comprising tubing providing a refrigerant circuit (18), a compressor (27) for compressing the refrigerant, a condenser (28) for cooling the refrigerant, an expansion device (29) configured to reduce the pressure of the refrigerant, and an evaporator (26) where the refrigerant is evaporated; wherein at least part of the tubing for the refrigerant circuit (18) is located within the solar thermal collector (13, 23).

2. A system as claimed in claim 1, wherein the condenser (28) is provided within the storage tank (25).

3. A system as claimed in claim 1 or 2, wherein the controller (31) further controls the air source heat pump system (22).

4. A system as claimed in any preceding claim, wherein the evaporator (26) is located within the solar thermal collector (13, 23).

5. A system as claimed in any preceding claim, wherein a substantial part of the tubing for the refrigerant circuit (18) located within the solar thermal collector (13, 23) is substantially evenly distributed therewithin and a substantial part of the tubing for the heat transfer fluid circuit (16) located within the solar thermal collector is substantially evenly distributed therewithin.

6. A system as claimed in any preceding claim, wherein a substantial part of the tubing for the heat transfer fluid circuit (16) located within the solar thermal collector (13, 23) runs transversely of the tubing for the refrigerant circuit (18) located within the solar thermal collector.

7. A system as claimed in claim 6, wherein a substantial part of the tubing for the heat transfer fluid circuit (16) located within the solar thermal collector (13, 23) runs substantially perpendicularly across the tubing for the refrigerant circuit (18) located within the solar thermal collector.

8. A system as claimed in any preceding claim, further comprising a receiver (34) for controlling the expansion device (29) of the air source heat pump system (22).

9. A system as claimed in claim 8, wherein the receiver comprises a low pressure receiver (34).

10. A system as claimed in claim 8 or 9 and including a liquid level sensor (36) within the receiver (34).

11. A system as claimed in claim 10, wherein the liquid level sensor (36) includes a low level switch (37) and a high level switch (38).

12. A system as claimed in any one of claims 8 to 11, wherein the evaporator (26) comprises a first evaporator part (26) and a second evaporator part (35), the receiver (34) being configured to allow refrigerant to enter the first evaporator (26) from the receiver and also to allow refrigerant to enter the second evaporator (35) from the receiver.

13. A system as claimed in claim 12, wherein refrigerant leaving the first evaporator (26) passes to the receiver (34) and refrigerant leaving the second evaporator (35) also passes to the receiver.

14. A system as claimed in claim 12 or 13, wherein the first evaporator (26) is an air source evaporator and the second evaporator (35) is a solar evaporator.
